(19) Europäisches Patentamt
European Patent Office
Office européen des brevets

(11) **EP 1 732 185 B1**

(12) **EUROPEAN PATENT SPECIFICATION**

(45) Date of publication and mention
of the grant of the patent:
**23.07.2008  Bulletin 2008/30**

(51) Int Cl.:
***H01S 3/104*** *(2006.01)*      ***H01S 3/097*** *(2006.01)*

(21) Application number: **06010912.1**

(22) Date of filing: **26.05.2006**

(54) **Laser oscillator**

Laseroszillator

Oscillateur laser

(84) Designated Contracting States:
**DE**

(30) Priority: **08.06.2005   JP 2005168075**

(43) Date of publication of application:
**13.12.2006   Bulletin 2006/50**

(73) Proprietor: **FANUC LTD**
**Minamitsuru-gun,**
**Yamanashi 401-0597 (JP)**

(72) Inventors:
• **Egawa, Akira**
**Gotenba-shi**
**Shizuoka 412-0043 (JP)**
• **Ando, Minoru,**
**Room 6-207**
**Minamitsuru-gun**
**Yamanashi 401-0511 (JP)**
• **Kobayashi, Eiji**
**Gotenba-shi**
**Shizuoka 412-0025 (JP)**
• **Watanabe, Takeshi**
**Fujiyoshida-shi**
**Yamanashi 403-0017 (JP)**

(74) Representative: **Thum, Bernhard**
**Wuesthoff & Wuesthoff**
**Patent- und Rechtsanwälte**
**Schweigerstrasse 2**
**81541 München (DE)**

(56) References cited:
**EP-A- 0 881 725**          **US-A- 4 677 636**
**US-A1- 2005 018 739**

• **FOX J A: "A DOUBLE-ELECTRODE-PAIR-PULSED LASER" APPLIED PHYSICS LETTERS, AIP, AMERICAN INSTITUTE OF PHYSICS, MELVILLE, NY, US, vol. 37, no. 7, 1 October 1980 (1980-10-01), pages 590-591, XP000706338 ISSN: 0003-6951**
• **LIHUA YE ET AL: "Conveniently assembled multiple-electrode-pair CO2 laser" ADVANCED HIGH-POWER LASERS 1-5 NOV. 1999 OSAKA, JAPAN, vol. 3889, 1 November 1999 (1999-11-01), pages 710-717, XP002392982 Proceedings of the SPIE - The International Society for Optical Engineering SPIE-Int. Soc. Opt. Eng USA ISSN: 0277-786X**
• **PATENT ABSTRACTS OF JAPAN vol. 1995, no. 08, 29 September 1995 (1995-09-29) & JP 07 122799 A (AMADA CO LTD), 12 May 1995 (1995-05-12)**

**Description**

BACKGROUND OF THE INVENTION

1. Field of the Invention

The present invention relates to a laser oscillator that excites a gas or a solid medium so as to produce laser output.

2. Description of the Related Art

In general, laser output produced by a laser oscillator is controlled by increasing or decreasing the power output of a corresponding power supply for lasing. Specifically, when a typical laser oscillator is commanded to increase laser output, the power output of the power supply is increased. When the laser oscillator is commanded to decrease the laser output, the power output of the power supply is decreased.

For example, a laser oscillator disclosed in Japanese Unexamined Patent Publication No. 7-122799 includes a plurality of electrode pairs and a plurality of power supplies associated with each of the electrode pairs. Laser output is quantitatively controlled by controlling the power supplies independently of one another.

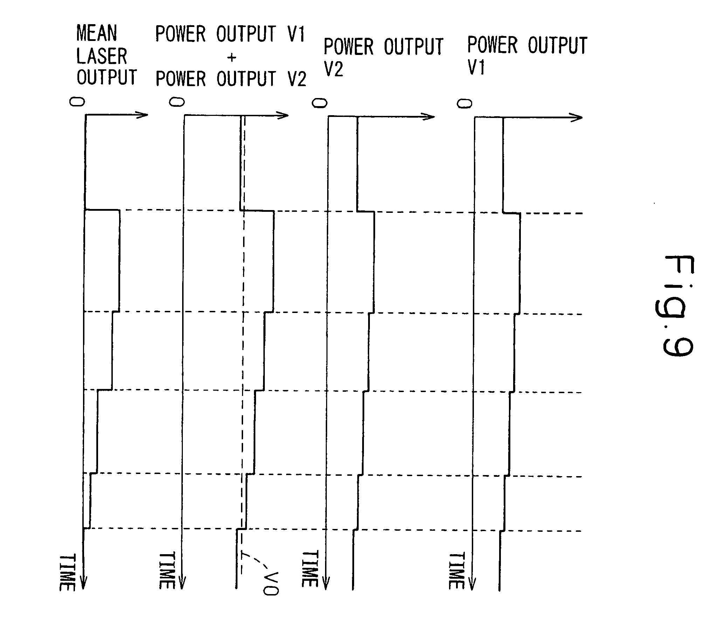

Fig. 9 shows the relationships of laser output and others to a time established in the laser oscillator in accordance with the related art disclosed, for example, in Japanese Unexamined Patent Publication No. 7-122799. As shown in Fig. 9, mean laser output is determined based on the sum (V1+V2) of power outputs V1 and V2 applied to a plurality of electrode pairs, or in Fig. 9, two electrode pairs. If the sum exceeds a predetermined threshold value V0, laser light is produced based on the sum. As apparent from Fig. 9, when the sum changes, the laser output quantitatively varies based on the change in the sum.

When a power output is increased, the temperature of laser gas rises to change the pressure of the laser gas. Moreover, the size of a discharge area and the discharge density thereof change accordingly. Since it takes a relatively long time for the changes to become stabilized, there is difficulty in quickly controlling laser output.

In order to avoid the above problem, for example, Japanese Unexamined Patent Publication No. 5-206554 discloses a laser oscillator that commands laser output on the basis of a laser output pattern, which takes account of a change in the laser output, so as to improve the precision in the wave of the laser output.

However, even in the laser oscillator disclosed in the Japanese Unexamined Patent Publication No. 5-206554, since a state of laser gas, for example, the temperature of laser gas changes along with variation of power output, laser output varies accordingly. Namely, even the Japanese Unexamined Patent Publication No. 5-206554 cannot avoid variation of laser output. Thus, the stability in the power is still unsatisfactory.

Lihuea YE et al., "Conveniently assembled multiple-electrode-pair CO2 laser", describes a laser having multiple electrode pairs disposed in series. A single clock pulse generator is designed to control each high voltage pulse generator of each of the electrode pairs via a common clock line.

Fox, J.A., "A double-electrode-pair-pulsed laser", describes a laser having to sets of electrodes in the optical cavity. The laser produces pulse pairs with time separations.

In order to emit laser light with small power, power output is decreased as can be seen from Fig. 9. In this case, since the discharge area becomes microscopic, discharge occurring in a discharge electrode included in a laser oscillator becomes so unstable that it vanishes from time to time. In particular, if the power is nulled during emission of laser light, it is hard to sustain major discharge in the discharge electrode, and there arises a high possibility that discharge will vanish.

A method has been proposed in which a preliminary discharge electrode is included aside from a main electrode so that major discharge can be sustained despite the nulling of power during emission of laser light. However, when the preliminary discharge electrode is employed, although power can be completely zeroed, it is still hard to control laser light in a stable manner with small power.

SUMMARY OF THE INVENTION

The present invention addresses the foregoing situation. An object of the present invention is to provide a laser oscillator in which discharge occurring in a discharge electrode can be stabilized and laser output can be quickly controlled.

In order to accomplish the foregoing object, according to the present invention, there is provided a laser oscillator as disclosed in claim 1.

The first pulse frequency and second pulse frequency are controlled so that they will be different from each other. Consequently, laser output can be adjusted by adjusting the sum of electric power to be applied to discharge areas in the first and second discharge pairs respectively. In this case, since adverse effects of factors that vary laser output, for example, the pressure and temperature of laser gas, and the size and discharge density of a discharge area, can be eliminated, discharged states hardly change. Consequently, even when laser output is changed, or more particularly, decreased, discharges in discharge electrodes can be stabilized and the laser output can be quickly controlled.

According to an embodiment of the present invention, the discharge power supply included in the laser oscillator according to the present invention can extend control so that the power output to be applied to the first electrode pair and the power output to be applied to the second electrode pair will be different from each other.

Specifically, in this embodiment, since the power outputs can be modified, if the modification of the power outputs is combined with the modification of the discharge phases, duty cycles, and/or pulse frequencies, laser output can be controlled more precisely. Moreover, at least one of the discharge phases, duty cycles, pulse frequencies, and power outputs may be controlled in order to obtain substantially constant laser output.

According to another embodiment of the present invention, a laser oscillator includes, in addition to the same components as those of the laser oscillator in accordance with the laser oscillator according to claim 1, a laser output command means for commanding a value of laser output to be produced by the laser oscillator, and a laser output detection means for detecting the value of laser output produced by the laser oscillator. A difference between a laser output command value commanded by the laser output command means and a laser output detection value detected by the laser output detection means is fed back to the discharge phase control means.

In this embodiment, laser output can be more accurately controlled through feedback control.

According to another embodiment of the present invention, the discharge power supply included in the laser oscillator in accordance with any of the first to sixth aspects includes a first discharge power supply for the first electrode pair and a second discharge power supply for the second electrode pair.

In this embodiment, since the discharge power supplies dedicated to the first and second electrode pairs respectively are included, laser output can be controlled with greater freedom.

According to another embodiment of the present invention, there is provided a laser oscillator including: a first electromagnetic-wave cavity; a second electromagnetic-wave cavity disposed in series with the first electromagnetic-wave cavity; a discharge power supply that induces pulse discharge in the first and second electromagnetic-wave cavities; and a discharge phase control means for extending control so that a first discharge phase to be attained in the first electromagnetic-wave cavity and a second discharge phase to be attained in the second electromagnetic-wave cavity will be different from each other during the pulse discharge induced by the discharge power supply.

According to another embodiment of the present invention, there is provided a laser oscillator including: a first electromagnetic-wave cavity; a second electromagnetic-wave cavity disposed in series with the first electromagnetic-wave cavity; a discharge power supply that induces pulse discharge in the first and second electromagnetic-wave cavities; and a duty cycle control means for extending control so that a first duty cycle to be attained in the first electromagnetic-wave cavity and a second duty cycle to be attained in the second electromagnetic-wave cavity will be different from each other during the pulse discharge induced by the discharge power supply.

According to another embodiment of the present invention, there is provided a laser oscillator including: a first electromagnetic-wave cavity; a second electromagnetic-wave cavity disposed in series with the first electromagnetic-wave cavity; a discharge power supply that induces pulse discharge in the first and second electromagnetic-wave cavities; and a pulse frequency control means for extending control so that a first pulse frequency to be attained in the first electromagnetic-wave cavity and a second pulse frequency to be attained in the second electromagnetic-wave cavity will be different from each other during the pulse discharge induced by the discharge power supply.

According to another embodiment of the present invention, there is provided a laser oscillator including: a first electromagnetic-wave cavity; a second electromagnetic-wave cavity disposed in series with the first electromagnetic-wave cavity; a discharge power supply that induces pulse discharge in the first and second electromagnetic-wave cavities; and at least one of a discharge phase control means for extending control so that a first discharge phase to be attained in the first electromagnetic-wave cavity and a second discharge phase to be attained in the second electromagnetic-wave cavity will be different from each other during the pulse discharge induced by the discharge power supply, a duty cycle control means for extending control so that a first duty cycle to be attained in the first electromagnetic-wave cavity and a second duty cycle to be attained in the second electromagnetic-wave cavity will be different from each other during the pulse discharge induced by the discharge power supply, and a pulse frequency control means for extending control so that a first pulse frequency to be attained in the first electromagnetic-wave cavity and a second pulse frequency to be attained in the second electromagnetic-wave cavity will be different from each other during the pulse discharge induced by the discharge power supply.

In the embodiments of the present invention, the first discharge phase and second discharge phase, the first duty cycle and second duty cycle, and the first pulse frequency and second pulse frequency are controlled so that they will be different from each other. Therefore, laser output can be adjusted by adjusting the sum of electric powers to be applied to discharge areas in the first and second electromagnetic-wave cavities respectively. In this case, since adverse effects of factors that vary laser output, for example, the pressure and temperature of laser gas, and the size and discharge density of a discharge area, can be eliminated, discharged states will therefore hardly be changed. Consequently, even when the laser output is changed, or more particularly, decreased, discharges in the electromagnetic-wave cavities can be stabilized and the laser output can be quickly controlled.

According to another embodiment of the present invention, the discharge power supply included in the laser oscillator in accordance with any of the previous embodiments can extend control so that the power output to be applied to the first electromagnetic-wave cavity and the power output to be applied to the second electromagnetic-wave cavity will be different from each other.

In this embodiment, since the power outputs can be modified, when the modification of the power outputs is combined with the modification of the discharge phases, duty cycles, and/or pulse frequencies, laser output can be more precisely controlled. Moreover, at least one of the discharge phases, duty cycles, pulse frequencies, and power outputs may be controlled in order to obtain substantially constant laser output.

According to another embodiment of the present invention, a laser oscillator includes a laser output command means for commanding a value of laser output to be produced by the laser oscillator, and a laser output detection means for detecting the value of laser output produced by the laser oscillator. A difference between a laser output command value commanded by the laser output command means and a laser output detection value detected by the laser output detection means is fed back to the discharge phase control means.

In this embodiment, laser output can be more accurately controlled through feedback control.

According to another embodiment, the discharge power supply included in the laser oscillator includes a first discharge power supply for the first electromagnetic-wave cavity and a second discharge power supply for the second electromagnetic-wave cavity.

In this embodiment, since the discharge power supplies dedicated to the first and second electromagnetic-wave cavities respectively are included, laser output can be controlled with high freedom.

According to another embodiment of the present invention, there is provided a laser oscillator including: a first coil; a second coil disposed in series with the first coil; a discharge power supply that induces pulse discharge in the first and second coils; and a discharge phase control means for extending control so that a first discharge phase to be attained in the first coil and a second discharge phase to be attained in the second coil will be different from each other during the pulse discharge induced by the discharge power supply.

According to another embodiment of the present invention, there is provided a laser oscillator including: a first coil; a second coil disposed in series with the first coil; a discharge power supply that induces pulse discharge at the first and second coils; and a duty cycle control means for extending control so that a first duty cycle to be attained in the first coil and a second duty cycle to be attained in the second coil will be different from each other during the pulse discharge induced by the discharge power supply.

According to another embodiment of the present invention, there is provided a laser oscillator including: a first coil; a second coil disposed in series with the first coil; a discharge power supply that induces pulse discharge in the first and second coils; and a pulse frequency control means for extending control so that a first pulse frequency to be attained in the first coil and a second pulse frequency to be attained in the second coil will be different from each other during the pulse discharge induced by the discharge power supply.

According to another embodiment of the present invention, there is provided a laser oscillator including: a first coil; a second coil disposed in series with the first coil; a discharge power supply that induces pulse discharge in the first and second coils; and at least one of a discharge phase control means for extending control so that a first discharge phase to be attained in the first coil and a second discharge phase to be attained in the second coil will be different from each other during the pulse discharge induced by the discharge power supply, a duty cycle control means for extending control so that a first duty cycle to be attained in the first coil and a second duty cycle to be attained in the second coil will be different from each other during the pulse discharge induced by the discharge power supply, and a pulse frequency control means for extending control so that a first pulse frequency to be attained in the first coil and a second pulse frequency to be attained in the second coil will be different from each other during the pulse discharge induced by the discharge power supply.

In the above embodiments, the first discharge phase and second discharge phase, the first duty cycle and second duty cycle, and the first pulse frequency and second pulse frequency are controlled so that they will be different from each other. Consequently, laser output can be adjusted by adjusting the sum of electric powers to be applied to discharge areas in the first and second coils respectively. In this case, adverse effects of factors that vary laser output, for example, the pressure and temperature of laser gas, and the size and discharge density of a discharge area, can be eliminated. Discharged states will therefore hardly change. Consequently, when laser output is changed, or more particularly, decreased, discharges occurring in coils can be stabilized and the laser output can be quickly controlled.

According to another embodiment of the present invention, the discharge power supply included in the laser oscillator in accordance with any of the above embodiments can extend control so that the power output to be applied to the first coil and the power output to be applied to the second coil will be different from each other.

In this embodiment, since the power outputs can be modified, if the modification of the power outputs is combined with the modification of the discharge phases, duty cycles, and pulse frequencies, laser output can be more precisely controlled. Moreover, at least one of the discharge phases, duty cycles, pulse frequencies, and power outputs may be controlled in order to obtain substantially constant laser output.

According to another embodiment, a laser oscillator includes, in addition to the same components as those of the laser oscillator in accordance with the fifteenth aspect, a laser output command means for commanding a value of laser output to be produced by the laser oscillator, and a laser output detection means for detecting the value of laser output produced by the laser oscillator. A difference between a laser output command value commanded by the laser output command means and a laser output detection value detected by the laser output detection means is fed back to the discharge phase control means.

In this embodiment, laser output can be more accurately controlled through feedback control.

According to another embodiment of the present invention, the discharge power supply included in the laser oscillator in accordance with any of the above embodiments includes a first discharge power supply for the first coil and a second discharge power supply for the second coil.

In another embodiment, since the discharge power supplies dedicated to the first and second coils respectively are included, laser output can be controlled with higher freedom.

From a description of typical embodiments of the present invention shown in the appended drawings, the object, constituent features, and advantages of the present invention as well as the other objects, constituent features, and advantages will be clarified.

BRIEF DESCRIPTION OF THE DRAWINGS

In the drawings:

Fig. 1 schematically shows a laser system including a laser oscillator in accordance with the present invention;
Fig. 2 shows a control unit in detail;
Fig. 3 shows the relationships of power outputs or the like to a time established in a case where a discharge phase is modified during pulse discharge induced in the first embodiment of the present invention;
Fig. 4 shows, similarly to Fig. 3, the relationships of power outputs or the like to a time established in a case where a duty cycle and/or a pulse frequency is modified during pulse discharge induced in the second embodiment of the present invention;
Fig. 5 shows, similarly to Fig. 3, the relationships of power outputs or the like to a time established in a case where a duty cycle and/or a pulse frequency is modified during pulse discharge induced in the third embodiment of the present invention;
Fig. 6 is an enlarged view of a laser oscillator in accordance with the fourth embodiment of the present invention;
Fig. 7 is an enlarged view of a laser oscillator in accordance with the fifth embodiment of the present invention;
Fig. 8 is an enlarged view of a laser oscillator in accordance with the sixth embodiment of the present invention; and
Fig. 9 shows the relationships of laser output and others to a time established in a laser oscillator in accordance with a related art.

DETAILED DESCRIPTION

Referring to the drawings, embodiments of the present invention will be described below. In the drawings, the similar reference numerals are assigned to similar members. For better understanding, scale is appropriately differentiated among the drawings.

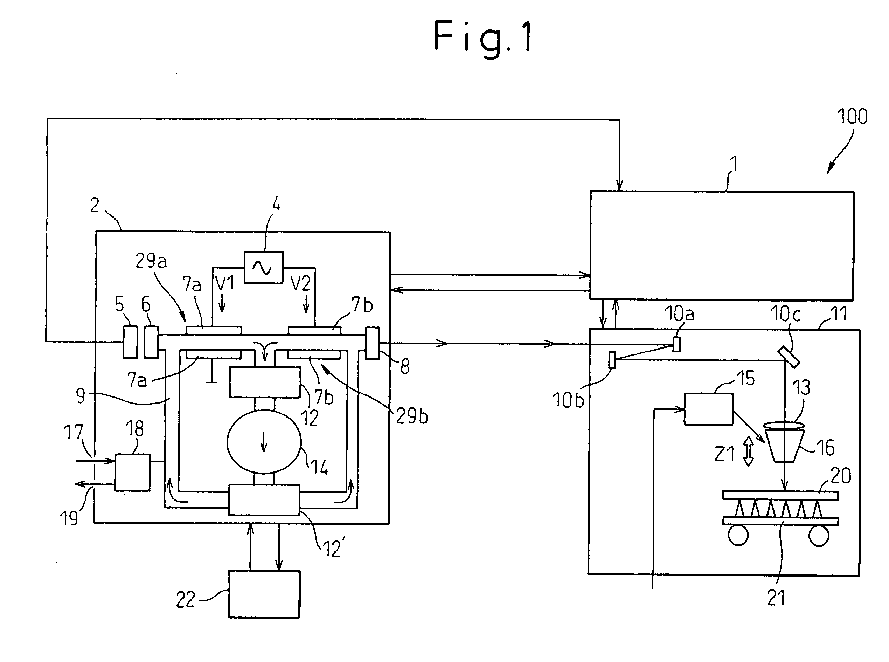

Fig. 1 schematically shows a laser system including a laser oscillator 2 in accordance with the present invention. The laser system 100 is adapted mainly to metallic working and includes the laser oscillator 2 and a laser processing machine 11. As shown in Fig. 1, the laser oscillator 2 and laser processing machine 11 are electrically interconnected via a control unit 1.

The laser oscillator 2 is a laser oscillator of a discharge pumped type that produces relatively large power, for example, a carbon dioxide gas laser that produces power of 1 kW or more. The laser oscillator 2 includes a discharge tube 9 connected to a laser gas pressure control system 18. The laser gas pressure control system 18 can feed and discharge laser gas to or from the discharge tube 9 through a laser gas feed port 17 or a laser gas discharge port 19 which is formed in the laser oscillator 2. A rearview mirror 6 (internal resonator mirror) (reflectance 99 %) that exhibits hardly any partial transmittance is disposed at one end of the discharge tube 9, an output mirror 8 (reflectance 50 %) that exhibits partial transmittance is disposed at the other end of the discharge tube 9. The output mirror 8 is made of zinc selenide (ZnSe). The internal surface of the output mirror 8 is coated to exhibit a property of partial reflection, and the external surface thereof is coated to exhibit a property of total reflection. A laser power sensor 5 is disposed on the back of the rearview mirror 6, and the value of laser output detected by the laser power sensor 5 is, as illustrated, transferred to the control unit 1. As illustrated, two discharge sections 29a and 29b are formed in an optical resonance space between the rearview mirror 6 and the output mirror 8.

The discharge sections 29a and 29b include discharge electrode pairs 7a and 7b respectively disposed to sandwich the discharge tube 9. As illustrated, the discharge electrode pairs 7a and 7b are disposed in series with each other on the discharge tube 9. The discharge electrode pairs 7a and 7b have the same dimensions and are coated with a dielectric material. As shown in Fig. 1, the discharge electrode pairs 7a and 7b are connected to a common high-frequency power supply 4 via respective matching circuits (not shown). The high-frequency power supply 4 is a high-frequency power supply that operates at, for example, 2 MHz, and can freely regulate electric power to be fed to each of the discharge sections 29a and 29b.

Furthermore, an air blower 14 is, as illustrated, disposed on the discharge tube 9. Heat exchangers 12 and 12' are disposed upstream and downstream of the air blower 14. Furthermore, the laser oscillator 2 is connected to a coolant circulation system 22 so that laser gas in the discharge tube 9 can be cooled appropriately.

Fig. 1 shows the laser oscillator 2 of a high-speed axial flow type. Alternatively, the laser oscillator 2 may be of any other type, for example, a triaxial orthogonal oscillator or a gas slab laser adopting a thermal diffusion cooling method.

Laser light emitted from the output mirror 8 included in the laser oscillator 2 is incident on the laser processing machine 11. A plurality of reflecting mirrors that reflect the incident laser light, or in Fig. 1, three reflecting mirrors 10a, 10b, and 10c are included in the laser processing machine 11. As illustrated, the laser light reflected by the reflecting mirrors 10a, 10b, and 10c is irradiated to a work 20 on a processing table 21 through a condenser lens 13 and a processing head 16. The condenser lens 13 is made of ZnSe and has both surfaces thereof coated to exhibit a property of total reflection. Alternatively, a parabolic mirror may be substituted for the condenser lens 13, though it is not shown.

Moreover, the work 20 can be positioned in place by horizontally modifying the position of the processing table 21. Furthermore, as shown in Fig. 1, the laser processing machine 11 is provided with an assistant gas feeding system 15. Assistant gas supplied from an assistant gas source (not shown) disposed outside of the laser processing machine 11 is fed to a desired position in the processing head 16 by the assistant gas feeding system 15.

The control unit 1 via which the laser oscillator 2 and laser processing machine 11 are electrically interconnected is realized with a digital computer and composed of a storage unit that includes a read-only memory (ROM) and a random-access memory (RAM) a processing unit such as a central processing unit (microprocessor), an input unit serving as input ports, and an output unit serving as output ports, which are interconnected over a bidirectional bus. The input unit and output unit are properly connected to predetermined components of the laser oscillator 2 and laser processing machine 11 alike.

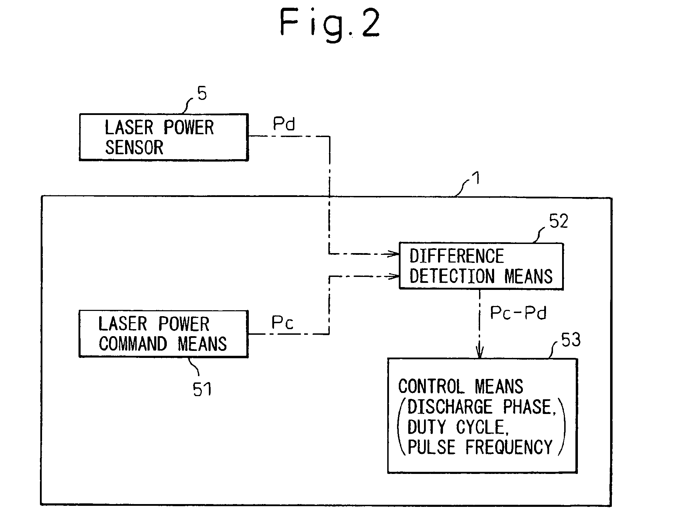

Fig. 2 shows the control unit in detail. As shown in Fig. 2, the control unit 1 includes a control means 53. The control means 53 controls the discharge phases X of power outputs V1 and V2 to be applied to the discharge electrode pairs 7a and 7b respectively, duty cycles Y thereof, and pulse frequencies Z thereof so that at least one of them can be modified. In other words, the control means 53 functions as a discharge phase control means, a duty cycle control means, and/or a pulse frequency control means.

Moreover, the control unit 1 includes, as illustrated, a laser power command means 51 that commands a value of laser output oscillated by the laser oscillator 2, and a difference detection means 52 that calculates a difference between a laser output command value Pc commanded by the laser power command means 51 and a laser output detection value Pd detected by a laser power sensor 5. The operations of the laser power command means 51 and the difference detection means 52 will be described later.

When the laser system 100 is in operation, laser gas is fed to the discharge tube 9 through the laser gas feed port 17 by the laser gas pressure control system 18. Thereafter, the laser gas circulates through a circulation path of the discharge tube 9 owing to the air blower 14. As indicated with arrows in Fig. 1, the laser gas fed owing to the air blower 14 passes through the heat exchanger 12' which removes heat of compression, and then reaches the discharge sections 29a and 29b.

In the discharge sections 29a and 29b, the discharge electrode pairs 7a and 7b apply an alternating voltage, which has a predetermined voltage value ranging, for example, from several hundreds of kilohertz to several tens of megahertz, to the laser gas. Due to this discharge operation, the laser gas is excited to generate laser light. Based on well-known principles, the laser light is amplified in the optical resonance space, and output laser light is emitted via the output mirror 8. The laser gas, whose temperature becomes high due to electric discharge, is cooled by the heat exchanger 12, and returned to the air blower 14. At this time, the coolant circulation system 22 starts to cool the laser gas in the discharge tube 9.

The laser light emitted from the output mirror 8 is, as illustrated, fed from the laser oscillator 2 to the laser processing machine 11. In the laser processing machine 11, the laser light is properly reflected from the three reflecting mirrors 10a, 10b, and 10c. The reflected laser light is converged by the condenser lens 13 and irradiated to the work 20 through the processing head 16. Consequently, the work 20 on the processing table 21 is machined, for example, cut or welded.

Incidentally, in the laser oscillator 2 in accordance with the present invention, the high-frequency power supply 4 induces pulse discharge in the discharge section 29a in the discharge electrode pair 7a and the discharge section 29b in the discharge electrode pair 7b. As shown in Fig. 1, power outputs to be applied to the respective discharge electrode pairs 7a and 7b shall be called power outputs V1 and V2 respectively. The maximum values of the power outputs V1 and V2 shall be smaller than a laser oscillating threshold value V0 that will be described later, and the sum ΣV of the power outputs V1 and V2 shall exceed the laser oscillating threshold value V0. As long as this relationship is satisfied, the maximum values of the power outputs V1 and V2 may be different from each other.

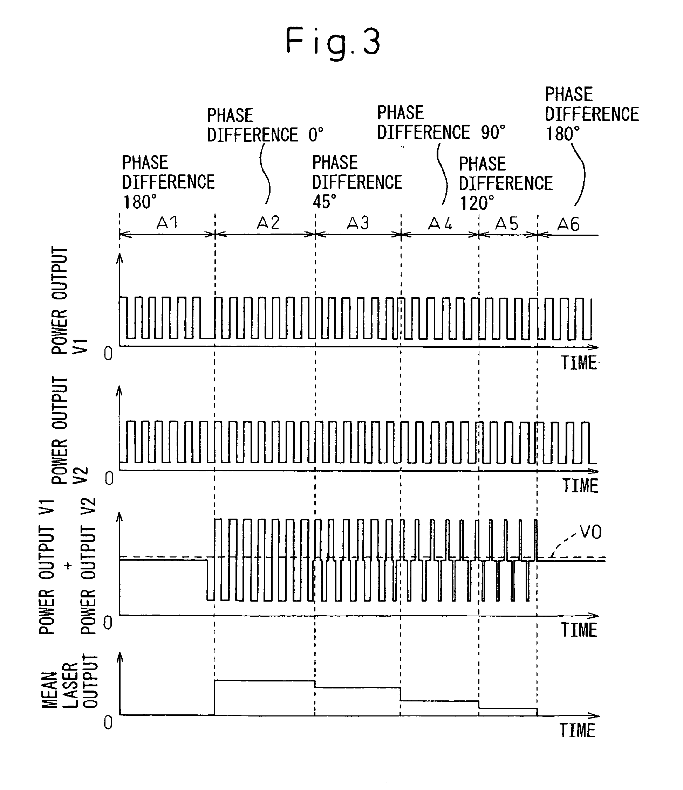

Fig. 3 shows the relationships of power outputs or the like to a time established in a case where a discharge phase is modified during pulse discharge. For areas A1 indicated in Fig. 3, a phase difference ΔX between the phase X1 of the power output V1 and the phase X2 of the power output V2 is set to 180° by the control means 53. Therefore, the sum ΣV (=V1+V2) of the power outputs V1 and V2 is equal to the maximum value of the power outputs V1 and V2. Consequently, the sum ΣV of the power outputs applied to the areas A1 is smaller than a laser oscillating threshold value V0. Namely, since discharge required for laser oscillating is not induced in the areas A1, no laser light is emitted.

As mentioned above, the control means 53 functions as a discharge phase control means. In the present invention, the control means 53 can modify the phase difference ΔX between the phase X1 of the power output V1 and the phase X2 of the power output V2. In order to modify the phase difference ΔX, referring to Fig. 3, the control means 53 adjusts the phase X1 of the power output V1 with respect to the phase X2 (reference phase) of the power output V2. Moreover, referring to Fig. 3, the maximum values of the power outputs V1 and V2 shall not be changed and the duty cycles Y of the power outputs V1 and V2 respectively and the pulse frequencies Z thereof shall be equal to each other.

For areas A2 indicated in Fig. 3, the control means 53 sets the phase difference ΔX to 0°, that is, the phases X1 and X2 will have no phase difference. Consequently, in the areas A2, the pulsating power output V1 and pulsating power output V2 overlap each other. Consequently, in the areas A2, the sum ΣV whose maximum value corresponds to the sum of the maximum value of the power output V1 and the maximum value of the power output V2 is obtained in a pulsating manner. Since the maximum value of the sum ΣV is larger than the laser oscillating threshold value V0, laser light is emitted in the areas A2 (refer to mean laser output shown in Fig. 3).

In order to adjust this mean laser output, the control means 53 modifies the phase X1 of the power output V1 with respect to the reference phase X2 as shown in areas A3 to areas A6 of Fig. 3. Thus, the phase difference ΔX is modified. Referring to Fig. 3, the phase differences ΔX occurring in the areas A3 to A6 are 45°, 90°, 120°, and 180°, respectively.

In the areas A3 where the phase difference ΔX is 45°, the power output V1 and power output V2 partly overlap each other. An overlapping portion in areas A3 is approximately 75 % as compared to that in the areas A2. In the areas A3, since only the overlapping portion of the sum ΣV exceeds the laser oscillating threshold value V0, mean laser output produced in the areas A3 is as low as approximately 75 % of the mean laser output produced in the areas A2.

In order to further decrease the mean laser output, as shown in Fig. 3, the phase difference ΔX is changed to 90°, 120°, and 180°, along with a change of areas from the areas A4 to the areas A6. Accordingly, the overlapping portion of the sum ΣV is changed to 50 %, 25 % and 0 % as compared to that in the areas A2. The mean laser output decreases accordingly. Specifically, in the present embodiment, if the phase difference ΔX between the phase X1 of the power output V1 and the phase X2 of the power output V2 is adjusted to become larger within the range of 0°≤ΔX≤180°, the laser output can be decreased. If the phase difference ΔX is adjusted to become smaller within the same range, the laser output is increased. Consequently, when the control means 53 adjusts the phase difference ΔX between the power output V1 and power output V2, that is, the control means 53 controls the power output V1 and power output V2 so that the phase X1 and phase X2 will be different from each other, the mean laser output can be adjusted.

In the laser oscillator 2 according to the present example, since only the phase difference ΔX between the phase X1 of the power output V1 and the phase X2 of the power output V2 is changed, the discharged states of the discharge sections 29a and 29b in the discharge electrode pairs 7a and 7b respectively hardly change. Specifically, in the laser oscillator 2 according to the present invention, the mean laser output, that is, the laser output can be adjusted with little change in the discharged states of the discharge sections 29a and 29b. In the related art, there is a problem in that the mean laser output is changed because of factors that vary the laser output, such as: the pressure and temperature of laser gas and the size and discharge density of a discharge area. In contrast, in the laser oscillator 2 according to the present example, since the adverse effects of the factors that vary the laser output can be eliminated, even when the laser output is changed, or especially, decreased, discharges occurring in discharge electrodes can be stabilized and the laser output can be quickly controlled.

When the laser oscillator 2 in accordance with the present example is put to use, the phase difference ΔX should preferably be fed back and controlled. Referring back to Fig. 2, in the control unit 1, the laser output command value Pc commanded by the laser power command means 51 is transferred to the difference detection means 52. Likewise, the actual laser output detection value Pd detected by the laser power sensor 5 (see Fig. 1) is transferred to the difference detection means 52.

The difference detection means 52 calculates the difference (Pd-Pc) between the laser output command value Pc and laser output detection value Pd. The difference (Pd-Pc) is transferred to the control means 53. The control means 53 feeds back and controls the phase difference ΔX according to the formula (1) below.

$$\Delta X \;\leftarrow\; \Delta X\{1+k(Pd-Pc)/Pc\} \hspace{4cm} (1)$$

Herein, k denotes an appropriate feedback coefficient of a positive value that is predetermined based on the type of laser oscillator 2 and a laser output value. The phase difference $\Delta X$ assumes values falling within the range of $0° \leq \Delta X \leq 180°$. If the new phase difference $\Delta X$ calculated according to the formula (1) assumes a negative value, the new phase difference $\Delta X$ is reset to $0°$. If the new phase difference $\Delta X$ is larger than $180°$, the new phase difference $\Delta X$ is set to $180°$. By way of this feedback control, a more appropriate phase difference $\Delta X$ is obtained. Eventually, the laser output can be more accurately controlled.

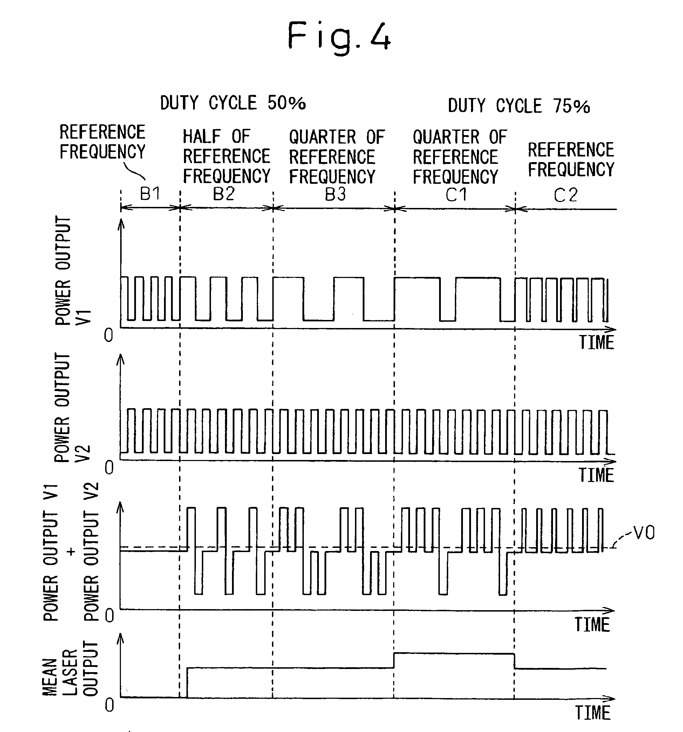

In the present invention, laser output can be adjusted by modifying a duty cycle and/or a pulse frequency. Fig. 4 shows, similarly to Fig. 3, the relationships of power outputs or the like to a time established in a case where the duty cycles and/or pulse frequencies is modified during pulse discharge induced in the first embodiment of the present invention. For areas B1 indicated in Fig. 4, similarly to the areas A1 in Fig. 3, the phase difference $\Delta X$ is set to $180°$ by the control means 53. Consequently, no laser light is emitted in the areas B1.

As mentioned above, the control means 53 functions as a duty cycle control means and/or a pulse frequency control means. In the present embodiment, the control means 53 modifies duty cycles Y and/or pulse frequencies Z. As illustrated, in Fig. 4, the control means 53 adjusts the pulse frequency Z1 of the power output V1 with respect to the pulse frequency Z2 of the power output V2 (reference pulse frequency), and adjusts the duty cycle Y1 of the power output V1 with respect to the duty cycle Y2 of the power output V2 (reference duty cycle). Moreover, in Fig. 4, the maximum values of the power outputs V1 and V2 that are subjected to pulse discharge shall not be modified, and the phases X1 and X2 of the power outputs V1 and V2 shall be equal to each other.

In areas B1 to areas B3 of Fig. 4, the duty cycle Y of the power output V1 is retained at a certain value (50 %). Over the areas B1 to the areas B3, only the pulse frequency Z of the power output V1 is modified. Assuming that the pulse frequency Z of the power output V1 attained in the associated area B1 is a reference frequency Z0, the pulse frequency Z in the associated area B2 corresponds to a half of the reference frequency Z0, that is, 0.5Z0. The pulse frequency Z in the associated area B3 corresponds to a quarter of the reference frequency Z0, that is, 0.25Z0.

On the other hand, in areas C1 and areas C2 indicated in Fig. 4, the duty cycle Y of the power output V1 is retained at a certain value. However, the duty cycle Y attained in the associated area C1 and area C2 is different from the duty cycle Y attained over the associated area B1 to area B3. The duty cycle Y attained in the associated area C1 and area C2 is 75 %. Moreover, the pulse frequency Z of the power output V1 attained in the associated area C1 corresponds to a quarter of the reference frequency Z0, that is, 0.25Z0. The pulse frequency Z attained in the area C2 is equal to the reference frequency Z0.

Between the areas B3 and areas C1 indicated in Fig. 4, the power output V1 is different in terms of only the duty cycle Y thereof. When the power output V1 assumes the maximum value in the associated area B3, since the sum EV exceeds the laser oscillating threshold value V0 in some places, laser light is emitted. On the other hand, even when the power output V1 assumes the maximum value in the associated area C1, since the sum $\Sigma V$ exceeds the laser oscillating threshold value V0 in some places, laser light is emitted.

However, since the duty cycle Y (75 %) of the power output V1 attained in the associated area C1 is larger than the duty cycle (50 %) thereof attained in the associated area B3, the number of times by which the power output V1 assumes the maximum value in the associated area C1 during a predetermined period is larger than the one in the associated area B3. Consequently, the number of times by which the sum $\Sigma V$ of the power outputs V1 and V2 applied to the respective areas C1 exceeds the laser oscillating threshold value V0 during the predetermined period is larger than the one relevant to the areas B3. Eventually, laser output produced in the areas C1 is larger than the one produced in the areas B3. Specifically, in the present embodiment, if the duty cycle Y1 of the power output V1 is adjusted to get smaller within the range of 0 %<Y1<100 %, the laser output is decreased. If the duty cycle Y1 is adjusted to become larger within the same range, the laser output is increased. Consequently, even when the control means 53 controls so that the duty cycle Y1 of the power output V1 and the duty cycle Y2 of the power output V2 will be different from each other, the laser output can be modified.

In the laser oscillator 2 according to the present embodiment, since only the duty cycles Y1 and Y2 of the power outputs V1 and V2 are changed, the discharged states of the discharge sections 29a and 29b in the discharge electrode pairs 7a and 7b respectively hardly change. Specifically, in the laser oscillator 2 according to the present invention, the laser output can be adjusted with little change in the discharged states of the discharge sections 29a and 29b. The present embodiment can provide the same advantage as the aforesaid one can.

Between the areas C1 and areas C2 in Fig. 4, the power output V1 is different in terms of only the pulse frequency Z thereof. As can be seen from Fig. 4, when the power output V1 assumes the maximum value, the sum $\Sigma V$ of the power outputs V1 and V2 exceeds the laser oscillating threshold value V0 during all time zones during which the power output V2 assumes the maximum value. Namely, when the power output V1 assumes the maximum value in the associated area C1, laser light is produced during all the time zones during which the power output V2 assumes the maximum value.

On the other hand, in the areas C2, the sum ΣV does not exceed the laser oscillating threshold value V0 during all the time zones during which the power outputs V1 and V2 assume the maximum values. As illustrated, since the pulse frequency Z (0.25Z0) of the power output V1 attained in the associated area C2 is larger than the pulse frequency Z (Z0) thereof attained in the associated area C1, the wave of the power output V1 only partly overlaps with the wave of the power output V2. Laser output produced in the areas C2 becomes smaller than the one in the areas C1. In other words, in the present embodiment, if the pulse frequency Z1 of the power output V1 is adjusted to become larger within the range of 0<Z1≤1, the laser output is decreased. If the pulse frequency Z2 of the laser output V2 is adjusted to become smaller within the same range, the laser output is increased. Consequently, even when the control means 53 controls so that the pulse frequency Z1 of the power output V1 and the pulse frequency Z2 of the power output V2 will be different from each other, the laser output can be modified.

In the laser oscillator 2 according to the present embodiment, since only the pulse frequencies Z1 and Z2 of the power outputs V1 and V2 respectively are changed, the discharged states of the discharge sections 29a and 29b in the discharge electrode pairs 7a and 7b respectively hardly change. Specifically, in the laser oscillator 2 according to the present invention, mean laser output can be adjusted with little change in the discharged states of the discharge sections 29a and 29b respectively. The same advantage as the aforesaid one can be provided.

In the embodiments described with reference to Fig. 4, only the phase X of the power output V2, the duty cycle Y thereof, or the pulse frequency Z thereof may be modified. Likewise, laser output may be adjusted by changing both the phases X of the power outputs V1 and V2, the duty cycles Y thereof, or the pulse frequencies Z thereof. Furthermore, a mode in which the laser output is adjusted by modifying at least one of the phases X of the power outputs V1 and V2, the duty cycles Y thereof, and the pulse frequencies Z thereof is encompassed in the scope of the present invention. Needless to say, if the phase X, duty cycle Y, and/or pulse frequency Z is modified more finely than it is as shown in the drawings, the laser output can be more precisely controlled.

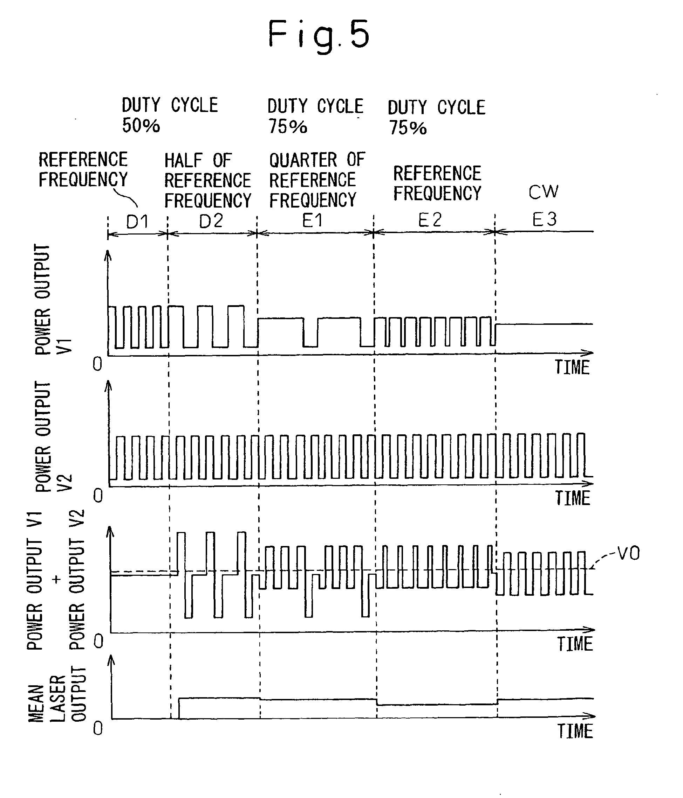

Fig. 5 shows, similarly to Fig. 3, the relationships of power outputs or the like to a time established in a case where a duty cycle and/or a pulse frequency is modified during pulse discharge induced in the second embodiment of the present invention. In Fig. 5, the maximum value of the power output V2, the duty cycle Y thereof, and the pulse frequency Z thereof shall not be modified. In areas D1 and areas D2 indicated in Fig. 5, the duty cycle Y of the power output V1 is retained at a certain value (50 %). Assuming that the pulse frequency Z of the power voltage V1 attained in the associated area D1 is the reference frequency Z0, the pulse frequency Z thereof attained in the associated area D2 corresponds to a half of the reference frequency Z0, that is, 0.5Z0.

On the other hand, in an area E1 and an area E2 indicated in Fig. 5, the duty cycle Y is retained at a certain value (75 %). Moreover, the pulse frequency Z attained in the area E1 corresponds to a quarter of the reference frequency Z0, that is, 0.25Z0, and the pulse frequency in the area E2 corresponds to the reference frequency Z0. In an area E3, a continuous wave CW is formed. In Fig. 5, the control means 53 adjusts the pulse frequency Z1 of the power output V1 with respect to the pulse frequency Z2 of the power output V2 (reference pulse frequency), and adjusts the duty cycle Y1 of the power output V1 with respect to the duty cycle Y2 of the power output V2 (reference duty cycle).

The duty cycle Y and pulse frequency Z of the power output V1 attained in the associated area E1 indicated in Fig. 5 are modified in comparison with the duty cycle Y and pulse frequency Z thereof attained in the associated area D2 so that laser output will increase.

Specifically, the duty cycle Y is changed from 50 % (area D2) to 75 % (area E1), and the pulse frequency Z is changed from 0.5Z0 (area D2) to 0.25Z0 (area E1). However, in the embodiment shown in Fig. 5, the maximum value of the power output V1 attained in the associated area E1 is made smaller than the maximum value thereof attained in the associated area D2. Consequently, in the areas E1, even if the duty cycle Y and pulse frequency Z of the power output V1 are modified in order to increase the laser output, since the maximum value of the power output V1 is made smaller, the laser output produced in the areas E1 is substantially equal to the laser output produced in the areas D2. Consequently, in the present embodiment, substantially constant laser output can be produced by controlling at least one of the discharge phase, duty cycle, pulse frequency, and power output. Moreover, if the modification of the discharge phase, duty cycle, and/or pulse frequency is combined with the modification of the power output, the laser output can be apparently more precisely controlled.

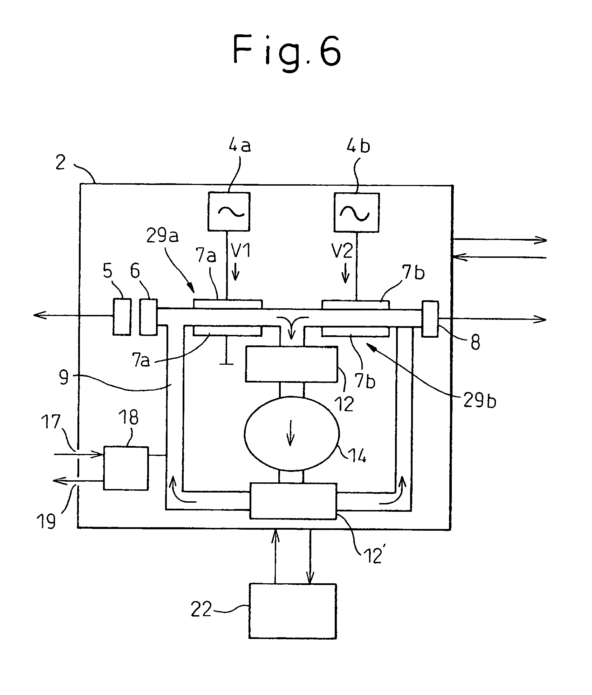

Fig. 6 is an enlarged view of a laser oscillator in accordance with the third embodiment of the present invention. In the third embodiment shown in Fig. 6, high-frequency power supplies 4a and 4b dedicated to discharge electrode pairs 7a and 7b respectively are included. Matching circuits associated with the high-frequency power supplies 4a and 4b respectively are not shown. Moreover, the control unit 1 is not shown for the sake of simplifying. In the third embodiment, power outputs to be applied to the discharge electrode pairs 7a and 7b respectively are controlled independently of each other by the high-frequency power supplies 4a and 4b respectively. This makes it possible to adjust the power outputs V1 and V2 with greater freedom. For example, when the power output V1 is demanded to be modified, the fourth embodiment capable of controlling the discharge outputs of the discharge electrode pairs 7a and 7b independently of each other using the high-frequency power supplies 4a and 4b is apparently advantageous.

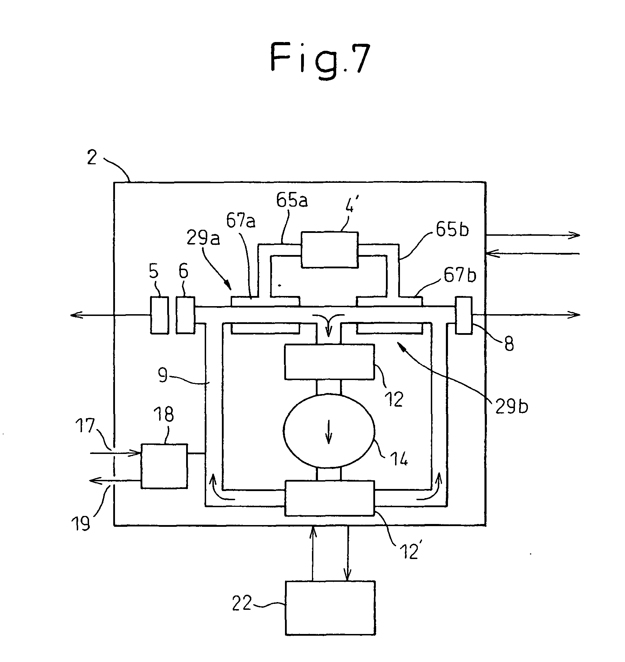

In the present invention, other members may be substituted for the discharge electrode pairs 7a and 7b in order to induce discharge in the discharge sections 29a and 29b. Fig. 7 is an enlarged view of a laser oscillator in accordance with the fourth embodiment of the present invention. For the sake of simplicity, the control unit 1 is not shown in Fig. 7. In Fig. 7, an electromagnetic-wave cavity 78a and an electromagnetic-wave cavity 67b disposed in series with the electromagnetic-wave cavity 67a are included in place of the discharge electrode pairs 7a and 7b. The discharge sections 29a and 29b are formed in the electromagnetic-wave cavities 67a and 67b respectively. In the present embodiment, the high-frequency power supply 4 is used as a microwave oscillator 4'. As illustrated, two waveguides 65a and 65b extending from the microwave oscillator 4' are connected to the electromagnetic-wave cavities 67a and 67b respectively.

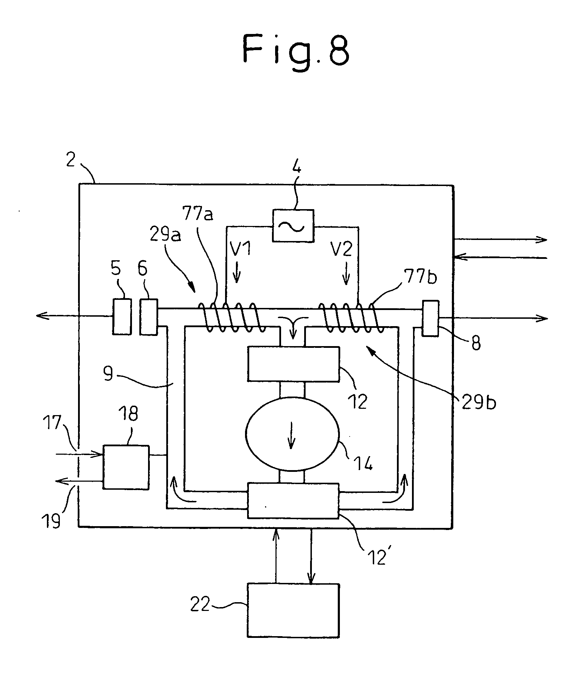

Fig. 8 is an enlarged view of a laser oscillator in accordance with the fifth embodiment of the present invention. For the sake of simplicity, the control unit 1 is not shown in Fig. 8. In Fig. 8, a coil 77a and a coil 77b disposed in series with the coil 77a are included in place of the discharge electrode pairs 7a and 7b. The discharge sections 29a and 29b are formed in the internal spaces of the coils 77a and 77b respectively. Moreover, as illustrated, the power outputs V1 and V2 are applied from the high-frequency power supply 4 to the coils 77a and 77b respectively.

Even in the fourth and fifth embodiments, the control means 53 modifies the phase X, the duty cycle Y and/or pulse frequency Z, or the discharge output. Consequently, laser output can be adjusted with little change in the discharged states of the discharge sections 29a and 29b respectively. The same advantage as the aforesaid one can be provided apparently.

Needless to say, any of the aforesaid embodiments may be combined appropriately. For example, even if the fourth and fifth embodiments include two high-frequency power supplies 4a and 4b, they are encompassed in the scope of the present invention.

The present invention has been described in relation to typical embodiments. However, a person with ordinary skill in the art can make various modifications, omissions, and additions other than the aforesaid ones without departing from the scope of the present invention as defined by the claims.

**Claims**

1. A laser oscillator including a first exciting means (7a, 67a, 77a), a second exciting means (7b, 67b, 77b) disposed spatially in series with the first exciting means (7a, 67a, 77a), and a discharge power supply (4) that induces pulse discharge in the first and second exciting means (7a, 67a, 77a, 7b, 67b, 77b), wherein the laser oscillator comprises:

   a pulse frequency control means (53) for extending control so that a first pulse frequency (Z1) to be attained in the first exciting means (7a, 67a, 77a) and a second pulse frequency (Z2) to be attained in the second exciting means (7b, 67b, 77b) will be different from each other during the pulse discharge induced by the discharge power supply (4):
   wherein the first exciting means comprises a first electrode pair (7a) and the second exciting means comprises a second electrode pair (7b), or
   wherein the first exciting means comprises a first electromagnetic-wave cavity (67a) and the second exciting means comprises a second electromagnetic-wave cavity (67b), or
   wherein the first exciting means comprises a first coil (77a) and the second exciting means comprises a second coil (77b),
   **characterized in that** the discharge power supply (4) extends extends control so that a maximum first power output (V1) to be applied to the first exciting means (7a, 67a, 77a) and a maximum second power output (V2) to be applied to the second exciting means (7b, 67b, 77b) are each smaller than a laser oscillating threshold value (V0) and the sum (V) of the first and second power outputs (V1, V2) exceeds the laser oscillating threshold value (V0).

2. The laser oscillator according to claim 1, **characterized in that** the laser oscillator further comprises:

   at least one of a discharge phase control means (53) for extending control so that a first discharge phase (X1) of a temporal variation of the pulse discharge to be attained in the first exciting means (7a, 67a, 77a) and a second discharge phase (X2) of a temporal variation of the pulse discharge to be attained in the second exciting means (7b, 67b, 77b) will be different from each other during the pulse discharge induced by the discharge power supply (4), and
   a duty cycle control means (53) for extending control so that a first duty cycle (Y1) to be attained in the first exciting means (7a, 67a, 77a) and a second duty cycle (Y2) to be attained in the second exciting means (7b, 67b, 77b) will be different from each other during the pulse discharge induced by the discharge power supply (4).

3. The laser oscillator according to claim 1 or 2, wherein the discharge power supply (4) can extend control so that a power output (V1) to be applied to the first exciting means (7a, 67a, 77a) and a power output (V2) to be applied to the second exciting means (7b, 67b, 77b) will be different from each other.

4. The laser oscillator according to one of claims 1 to 3, further comprising:

a laser output command means (51) for commanding a value of laser output to be produced by the laser oscillator (2); and
a laser output detection means (5) for detecting the value of laser output produced by the laser oscillator (2), wherein:

a difference (Pd-Pc) between a laser output command value (Pc) commanded by the laser output command means (51) and a laser output detection value (Pd) detected by the laser output detection means (5) is fed back to the discharge phase control means (53).

5. The laser oscillator according to one of claims 1 to 4, wherein the discharge power supply (4) includes a first discharge power supply (4a) for the first exciting means (7a, 67a, 77a) and a second discharge power supply (4b) for the second exciting means (7b, 67b, 77b).


**Patentansprüche**

1. Laser-Oszillator mit ersten Anregungsmitteln (7a, 67a, 77a), zweiten Anregungsmitteln (7b, 67b, 77b), die räumlich in Reihe mit den ersten Anregungsmitteln (7a, 67a, 77a) angeordnet sind, und einer Entladungsstromversorgung (4), die Pulsentladungen in den ersten und zweiten Anregungsmitteln (7a, 67a, 77a, 7b, 67b, 77b) hervorruft, wobei der Laser-Oszillator umfasst:

Pulsfrequenzsteuermittel (53) zum Ausüben einer Steuerung derart, dass eine erste in den ersten Anregungsmitteln (7a, 67a, 77a) zu erzielende Pulsfrequenz (Z1) und eine zweite in den zweiten Anregungsmitteln (7b, 67b, 77b) zu erzielende Pulsfrequenz (Z2) sich voneinander während der mittels der Entladungsstromversorgung (4) hervorgerufenen Pulsentladung voneinander unterscheiden:
wobei die ersten Anregungsmittel ein erstes Elektrodenpaar (7a) und die zweiten Anregungsmittel ein zweites Elektrodenpaar (7b) umfassen, oder
wobei die ersten Anregungsmittel eine erste Kavität (67a) für eine elektromagnetische Welle und die zweiten Anregungsmittel eine zweite Kavität (67b) für elektromagnetische Wellen umfassen, oder
wobei die ersten Anregungsmittel eine erste Spule (77a) und die zweiten Anregungsmittel eine zweite Spule (77b) umfassen,
**dadurch gekennzeichnet, dass**
die Entladungsstromversorgung (4) die Steuerung so ausübt, dass eine auf die ersten Anregungsmittel (7a, 67a, 77a) aufgebrachte maximale erste Leistungsausgabe (V1) und eine auf die zweiten Anregungsmittel (7b, 67b, 77b) aufgebrachte maximale zweite Leistungsausgabe (V2) jeweils kleiner als ein Laser-Oszillations- Schwellenwert (V0) sind und die Summe (V) der ersten und der zweiten Leistungsausgaben (V1, V2) den Laser- Oszillations-Schwellenwert (V0) übertrifft.

2. Laser-Oszillator nach Anspruch 1, **dadurch gekennzeichnet, dass** der Laser-Oszillator ferner umfasst:

Entladungsphasensteuermittel (53) zum Ausüben der Steuerung derart, dass eine erste Entladungsphase (X1) einer zeitlichen Variation der in den ersten Anregungsmitteln (7a, 67a, 77a) zu erzielenden Pulsentladung und eine zweite Entladungsphase (X2) einer zeitlichen Variation in den zweiten Anregungsmitteln (7b, 67b, 77b) zu erzielenden Pulsentladung sich voneinander während der mittels der Entladungsstromversorgung (4) hervorgerufenen Pulsentladung unterscheiden, und/oder
Arbeitszyklussteuermittel (53) zum Ausüben einer Steuerung derart, dass ein in den ersten Anregungsmitteln (7a, 67a, 77a) zu erzielender erster Arbeitszyklus (Y1) und ein in den zweiten Anregungsmitteln (7b, 67b, 77b) zu erzielender zweiter Arbeitszyklus (Y2) sich während der mittels der Entladungsstromversorgung (4) hervorgerufenen Pulsentladung voneinander unterscheiden.

**3.** Laser-Oszillator nach Anspruch 1 oder 2, wobei die Entladungsstromversorgung (4) eine Steuerung so ausüben kann, dass eine auf die ersten Anregungsmittel (7a, 67a, 77a) anzuwendende Leistungsausgabe (V1) und eine auf die zweiten Anregungsmittel (7b, 67b, 77b) anzuwendende Leistungsausgabe (V2) sich voneinander unterscheiden.

**4.** Laser-Oszillator nach einem der Ansprüche 1 bis 3, ferner umfassend:

Laserausgabe-Anweisungsmittel (51) zum Anweisen eines Wertes einer mittels des Laser-Oszillators (2) zu erzeugenden Laserausgabe; und
Laserausgabe-Detektionsmittel (5) zum Detektieren des Wertes der mittels des Laser-Oszillators (2) erzeugten Laserausgabe, wobei:

eine Differenz (Pd-Pc) zwischen einem Laserausgabe-Anweisungswert (Pc), der mittels der Laserausgabe-Anweisungsmittel (51) angewiesen wurde, und einem Laserausgabe-Detektionswert (Pd), der mittels der Laserausgabe-Detektionsmittel (5) detektiert wurde, den Entladungsphase-Steuermitteln (53) rückgekoppelt wird.

**5.** Laser-Oszillator nach einem der Ansprüche 1 bis 4, wobei die Entladungsstromversorgung (4) eine erste Entladungsstromversorgung (4a) für die ersten Anregungsmittel (7a, 67a, 77a) und eine zweite Entladungsstromversorgung (4b) für die zweiten Anregungsmittel (7b, 67b, 77b) umfasst.

## Revendications

**1.** Oscillateur laser comprenant un premier moyen d'excitation (7a, 67a, 77a), un deuxième moyen d'excitation (7b, 67b, 77b) disposé de manière spatiale en série avec le premier moyen d'excitation (7a, 67a, 77a), et une alimentation de décharge (4) qui induit une décharge d'impulsion dans les premier et deuxième moyens d'excitation (7a, 67a, 77a, 7b, 67b, 77b), dans lequel l'oscillateur laser comprend :

un moyen de commande de fréquence des impulsions (53) destiné à étendre la commande de sorte qu'une première fréquence d'impulsion (Z1) devant être atteinte dans le premier moyen d'excitation (7a, 67a, 77a) et une deuxième fréquence d'impulsion (Z2) devant être atteinte dans le deuxième moyen d'excitation (7b, 67b, 77b) soient différentes l'une de l'autre pendant la décharge d'impulsion induite par l'alimentation de décharge (4) ;
dans lequel le premier moyen d'excitation comprend une première paire d'électrodes (7a) et le deuxième moyen d'excitation comprend une deuxième paire d'électrodes (7b), ou
dans lequel le premier moyen d'excitation comprend une première cavité d'ondes électromagnétiques (67a) et le deuxième moyen d'excitation comprend une deuxième cavité d'ondes électromagnétiques (67b), ou
dans lequel le premier moyen d'excitation comprend une première bobine (77a) et le deuxième moyen d'excitation comprend une deuxième bobine (77b),
**caractérisé en ce que** l'alimentation de décharge (4) étend la commande de sorte qu'une première puissance de sortie maximale (V1) devant être appliquée au premier moyen d'excitation (7a, 67a, 77a) et une deuxième puissance de sortie maximale (V2) devant être appliquée au deuxième moyen d'excitation (7b, 67b, 77b) sont chacune inférieures à une valeur de seuil d'oscillation laser (V0) et que la somme (V) des première et deuxième puissances de sortie (V1, V2) dépasse la valeur de seuil d'oscillation laser (V0).

**2.** Oscillateur laser selon la revendication 1, **caractérisé en ce que** l'oscillateur laser comprend en outre :

au moins un moyen de commande de phase de décharge (53) destiné à étendre la commande de sorte qu'une première phase de décharge (X1) d'une variation temporelle de la décharge d'impulsion devant être atteinte dans le premier moyen d'excitation (7a, 67a, 77a) et une deuxième phase de décharge (X2) d'une variation temporelle de la décharge d'impulsion devant être atteinte dans le deuxième moyen d'excitation (7b, 67b, 77b) sont différentes l'une de l'autre pendant la décharge d'impulsion induite par l'alimentation de décharge (4), et
un moyen de commande du rapport cyclique (53) destiné à étendre la commande de sorte qu'un premier rapport cyclique (Y1) devant être atteint dans le premier moyen d'excitation (7a, 67a, 77a) et un deuxième rapport cyclique (Y2) devant être atteint dans le deuxième moyen d'excitation (7b, 67b, 77b) sont différents l'un de l'autre pendant la décharge d'impulsion induite par l'alimentation de décharge (4).

**3.** Oscillateur laser selon la revendication 1 ou 2, dans lequel l'alimentation de décharge (4) peut étendre la commande de sorte qu'une puissance de sortie (V1) devant être appliquée au premier moyen d'excitation (7a, 67a, 77a) et une puissance de sortie (V2) devant être appliquée au deuxième moyen d'excitation (7b, 67b, 77b) sont différentes l'une de l'autre.

4. Oscillateur laser selon l'une quelconque des revendications 1 à 3, comprenant en outre :

un moyen de commande de sortie laser (51) destiné à commander une valeur de la sortie laser devant être produite par l'oscillateur laser (2) ; et
un moyen de détection de sortie laser (5) destiné à détecter la valeur de la sortie laser produite par l'oscillateur laser (2), dans lequel :

une différence (Pd-Pc) entre une valeur de commande de sortie laser (Pc) commandée par le moyen de commande de sortie laser (51) et une valeur de détection de sortie laser (Pd) détectée par le moyen de détection de sortie laser (5) est ramenée vers le moyen de commande de phase de décharge (53).

5. Oscillateur laser selon l'une quelconque des revendications 1 à 4, dans lequel l'alimentation de décharge (4) comprend une première alimentation de décharge (4a) pour le premier moyen d'excitation (7a, 67a, 77a) et une deuxième alimentation de décharge (4b) pour le deuxième moyen d'excitation (7b, 67b, 77b).

# Fig.1

# Fig.2

LASER POWER SENSOR
5
Pd

1

DIFFERENCE DETECTION MEANS
52

LASER POWER COMMAND MEANS
51
Pc

Pc-Pd

CONTROL MEANS
(DISCHARGE PHASE, DUTY CYCLE, PULSE FREQUENCY)
53

# Fig.3

# Fig.4

# Fig.5

DUTY CYCLE 50%   DUTY CYCLE 75%   DUTY CYCLE 75%

REFERENCE FREQUENCY   HALF OF REFERENCE FREQUENCY   QUARTER OF REFERENCE FREQUENCY   REFERENCE FREQUENCY   CW

D1   D2   E1   E2   E3

POWER OUTPUT V1

POWER OUTPUT V2

POWER OUTPUT V1 + POWER OUTPUT V2

V0

MEAN LASER OUTPUT POWER OUTPUT

TIME

# Fig.6

Fig.7

# Fig.8

# Fig.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7122799 A

- JP 5206554 A